(19) Europäisches Patentamt
European Patent Office
Office européen des brevets

(11) Veröffentlichungsnummer: **0 202 467**
**A2**

(12) # EUROPÄISCHE PATENTANMELDUNG

(21) Anmeldenummer: **86105090.4**

(22) Anmeldetag: **14.04.86**

(51) Int.Cl.[4]: **C 08 F 292/00**
C 08 F 2/44

(30) Priorität: **25.04.85 DE 3514866**

(43) Veröffentlichungstag der Anmeldung:
**26.11.86 Patentblatt 86/48**

(84) Benannte Vertragsstaaten:
**BE DE FR GB IT**

(71) Anmelder: **BAYER AG**
**Konzernverwaltung RP Patentabteilung**
**D-5090 Leverkusen 1 Bayerwerk(DE)**

(72) Erfinder: **Podszun, Wolfgang, Dr.**
**Wolfskaul 4**
**D-5000 Koeln 80(DE)**

(72) Erfinder: **Waniczek, Helmut, Dr.**
**Wolfskaul 2**
**D-5000 Koeln 80(DE)**

(54) **Mit Polycyanacrylat umhülltes Pigment und ein Verfahren zur Umhüllung von Pigmenten.**

(57) Die Erfindung betrifft ein mit Polycyanacrylat umhülltes Pigment sowie ein Verfahren zur Umhüllung von Pigmenten.

Croydon Printing Company Ltd

0202467

BAYER AKTIENGESELLSCHAFT 5090 Leverkusen, Bayerwerk
Konzernverwaltung RP
Patentabteilung Eck/by-c

# Mit Polycyanacrylat umhülltes Pigment und ein Verfahren zur Umhüllung von Pigmenten

Die Erfindung betrifft ein mit Polycyanacrylat umhülltes Pigment sowie ein Verfahren zur Umhüllung von Pigmenten.

Zur Beschichtung und Umhüllung von anorganischen und organischen Pigmenten sind zahlreiche unterschiedlich aufgebaute polymere Substanzen vorgeschlagen worden. Aus der US-PS 4 452 861 sind feste Partikel, z.B. phosphoreszierende Substanzen bekannt, die mit Polycyanacrylat beschichtet sind. Bei der Herstellung dieser beschichteten Partikel wird die Polymerisation des monomeren Cyanacrylates durch geringe Wassermengen, die z.B. an der Feststoffoberfläche adsorbiert sein können oder im Lösungsmittel sein können, eingeleitet. Bei diesen Beschichtungsverfahren wird keine chemische Bindung zwischen Feststoffoberfläche und Polymerisathülle aufgebaut. Diese Hüllen sind beispielsweise gegenüber Angriffen von Lösungsmitteln und Bindemitteln weniger stabil.

Es wurde nun gefunden, daß Pigmente mit Polycyanacrylat umhüllt werden können, indem die anionische Polymerisation des monomeren Cyanacrylats durch die Pigmentoberfläche selbst ausgelöst wird.

Gegenstand der Erfindung ist somit ein mit Polymerisat umhülltes Pigment, vorzugsweise ein anorganisches oder organisches Pigment mit einer basischen oder neutralen Oberfläche, dadurch gekennzeichnet, daß die Polymerisathülle aus Polycyanacrylat besteht.

Ein weiterer Gegenstand der Erfindung ist ein Verfahren zum Umhüllen eines basischen oder neutralen Pigmentes, dadurch gekennzeichnet, daß Cyanacrylat in einem aprotischen Lösungsmittel in Anwesenheit des dispergierten Pigmentes polymerisiert wird.

Als Pigmente eignen sich bekannte organische und anorganische, vorzugsweise organische Pigmente.

Geeignete anorganische Pigmente sind beispielsweise oxidische Titanpigmente, Chrompigmente, Eisenpigmente usw.

Geeignete organische Pigmente sind beispielsweise Azofarbstoffe, Xanthenfarbstoffe, Phthalocyaninfarbstoffe, wie sie z.B. in der DE-OS 2 944 021 beschrieben werden, Triphenylmethanfarbstoffe, Acridinfarbstoffe, Azinfarbstoffe usw.

Die erfindungsgemäß verwendbaren Pigmente zeigen im allgemeinen in einer Pigment-Wasser-Suspension einen pH-Wert von 6 bis 12, vorzugsweise von 7 bis 11.

Der pH-Wert läßt sich in einerfacher Weise, z.B. durch Messung mit Hilfe einer Glaselektrode in einer Pigment-Wasser-Suspension bestimmen (z.B. nach DIN 53 200). Weiterhin kann es möglich sein durch eine saure oder alkalische, vorzugsweise alkalische Vorbehandlung des Pigmentes den pH-Wert zu beeinflussen. Es kann so z.B. ein gewünschter pH-Wert eingestellt werden.

Der Wassergehalt der Pigmente kann für ihre erfindungsgemäße Verwendung von Bedeutung sein. Im allgemeinen werden Pigmente mit einem Wassergehalt von 0 bis 1 Gew.- %, bevorzugt von 0 bis 0,10 Gew.-% Wasser eingesetzt.

Es können Pigmente der unterschiedlichsten Farbtypen verwendet werden, z.B. Rot-, Gelb-, Blau-, Grün-, Weiß-, Schwarzpigmente usw.

Geeignete Schwarzpigmente sind z.B. basische Rußtypen. Bevorzugt wird Ruß mit einer Primärteilchengröße von 20 bis 80 nm, einer BET-Oberfläche von 20 bis 150 $m^2/g$ und einem pH-Wert von 8 bis 10.

Als Farbpigmente eignen sich ohne Vorbehandlung z.B. Helioechtblau HG (C.I. Nr. 74160), Fanalrosa (C.I. Nr. 45160) und Helioechtgelb GRN (C.I. Nr. 21100).

Zur Umhüllung des Pigmentes werden bevorzugt Cyanacrylate der Formel (I) verwendet

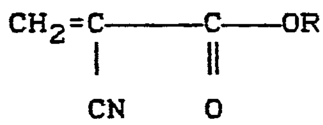

(I),

in der

R Alkyl, insbesondere mit 1 bis 10 C-Atomen, Alkenyl mit 2 bis 10 C-Atomen, Cycloalkyl, insbesondere Cyclohexyl, Alkenyl, insbesondere Allyl, Aryl, insbesondere Phenyl und Aralkyl, insbesondere Benzyl bedeutet.

Die genannten Substituenten können ihrerseits mit auf dem Gebiet der Polycyanacrylate üblichen Substituenten z.B. mit Alkoylgruppen substituiert sein.

Bevorzugte Beispiele sind Ethyl-, Methyl-, Butyl-, Isobutyl-, Amyl-, Allyl-, Laurylcyanacrylat und Methoxyethylcyanacrylat besonders bevorzugt Isobutylcyanacrylat und Allylcyanacrylat.

Es können Mischungen der Acrylate verwendet werden, wobei Gemische die Alkenylcyanacrylate enthalten, bevorzugt sind. Besonders günstig sind Mischungen mit einem Gehalt an 5 bis 50 Gew.-% Allylcyanacrylat.

Das monomere Cyanacrylat wird vorzugsweise in solchen Gewichtsmengen eingesetzt, daß das Gewichtsverhältnis von Pigment zu Polymerisathülle 1:2 bis 1:0,01, vorzugsweise 1:0,5 bis 1:0,05 beträgt.

Zur Umhüllung des Pigmentes mit Polycyanacrylat wird vorzugsweise das Cyanacrylat in Dispersion polymerisiert. Als Dispersionsmedium sind aprotische Lösungsmittel geeignet. Besonders geeignet sind Kohlenwasserstoffe und Halogenkohlenwasserstoffe.

Bevorzugt werden Dispersionsmedien auf Kohlenwasserstoffbasis, beispielsweise aromatische Kohlenwasserstoffe wie Benzol, Toluol oder Xylole oder aliphatische $C_6$-$C_{15}$-Kohlenwasserstoffe, wie n-Hexan, Cyclohexan, n-Heptan, n-Octan oder Dekalin. Auch Mischungen unterschiedlicher Kohlenwasserstoffe können vrwendet werden. Die Dispersionsmedien werden im allgemeinen vor ihrer Verwendung nach üblichen Verfahren absolutiert.

Die Dispersion kann mit üblichen Dispergiergeräten z.B. Schnellrührern oder Mühlen hergestellt werden, weiterhin durch Ultraschall sowie durch Anwendung von Kugel- bzw. Perlmühlen.

Es kann zweckmäßig sein, bei der Zubereitung der Dispersion ein Dispergierhilfsmittel anzuwenden.

Als Dispergierhilfsmittel können dabei lösliche, hochmolekulare Verbindungen, wie Homo- oder Mischpolymerisate aus (Meth)-acrylsäureestern, beispielsweise ein 1:1-Mischpolymerisat aus Isobutylmethacrylat und Laurylmethacrylat eingesetzt werden. Gut geeignet sind Mischpolymerisate mit einem Anteil von 0,1 bis 15 Gew.-% an einpolymerisierten Monomeren mit OH-Gruppen, z.B. 2-Hydroxyethylmethacrylat.

Besonders gut geeignete Dispergierhilfsmittel sind Blockcopolymerisate, z.B. Styrol-Stearylmethacrylat-Blockcopolymerisate oder mercaptanmodifizierte Styrol-Butadien-Blockcopolymere (DE-A 34 12 085).

Beim Dispergieren werden im allgemeinen Teilchengrößen im Bereich von 0,1 bis 10 µm, vorzugsweise 0,2 bis 2 µm eingestellt. Die Beschichtung des Pigmentes erfolgt durch Zugabe der monomeren Cyanacrylate, vorzugsweise in Form eines Zulaufverfahrens, beispielsweise über einen Zeitraum von 10 bis 120 Minuten. Die Polymerisation findet in der Regel unter der katalytischen Wirkung des Pigmentes statt und führt in kurzen Reaktionszeiten zu hohen Polymerumsätzen, im allgemeinen von mehr als 70 %, wobei das gebildete Polymerisat in Form einer Hülle auf der Pigmentoberfläche gebildet werden kann.

Die Polymerisationstemperatur kann im Temperaturbereich von 0 bis 80°C liegen.

Das umhüllte Pigment kann z.B. durch Abdampfen des Dispersionsmediums isoliert werden. Weiterhin ist es möglich, z.B. eine Filtration anzuwenden. Auch Zentrifugieren kann insbesondere bei sehr feinteiligen Pigmenten eine geeignete Aufarbeitungsmethode sein.

Das erfindungsgemäße mit Polycyanacrylat umhüllte Pigment, ist z.B. zur Herstellung von Druckpasten geeignet. Es läßt sich leicht dispergieren und in hohen Anteilen in Bindemitteln einarbeiten. Auch zum Einfärben von thermoplastischen Kunststoffen ist es geeignet und führt dabei zu Einfärbungen vo hoher Brillanz und Farbstärke.

Ein weiteres Einsatzgebiet des erfindungsgemäß umhüllten Pigmentes ist die Anwendung als elektrostatographischer Entwickler, insbesondere als Suspensionsentwickler. Zur Herstellung eines Suspensionsentwicklers wird die Dispersion des umhüllten Pigmentes, die im allgemeinen eines der oben beschriebenen Dispergierhilfsmittel enthält, mit einem Steuerstoff, versetzt, der die elektrostatische Aufladung des Pigmentteilchens bewirkt. Als Steuerstoff eignen sich z.B. öllösliche ionogene Verbindungen wie etwa Metallsalze langkettiger organischer Säuren. Es können auch Gemische von verschiedenen Steuerstoffen, z.B. ein Gemisch von verschiedenen Steuerstoffen mit entgegengesetzten Ladungseffekten verwendet werden. Die Stärke der Ladung auf dem Toner oder deren Polarität kann dann durch Änderung des Mischungsverhältnisses der beiden Steuerstoffe eingestellt werden (z.B. GB-PS 1 411 287, 1 441 537 und 1 411 739). Besonders geeignete, positiv arbeitende Steuerstoffe werden in der GB-PS 1 151 141 beschrieben. Diese Steuerstoffe sind zwei- oder dreiwertige Metallsalze einer von Phosphor abgeleiteten, einen organischen Rest enthaltenden Oxysäure.

Neben dem Steuerstoff kann der Suspensionsentwickler natürlich die weiteren auf diesem Gebiet üblichen Zusätze wie z.B. Haft- und Fixiermittel enthalten. Der Flüssigentwickler zeichnet sich besonders durch eine hohe Ladungsstabilität und geringer Leitfähigkeit des Dispersionsmediums aus.

## Beispiel 1

### A. Synthese eines Dispergierhilfsmittels

In einem 2-Liter Glasautoklaven werden unter Ausschuß von Wasser und Sauerstoff 1000 ml Cyclohexan, 5 ml Glykoldimethylether und 50 g Styrol vorgelegt. Die Mischung wird mit einer 1 molaren n-Butyllithiumlösung in n-Hexan vorsichtig bis zur schwachen Gelbfärbung titriert. Dann gibt man 3 ml der 1 molaren Butyllithiumlösung zu. Durch Außenkühlung wird die Polymerisationstemperatur bei 40°C gehalten. Nach einer Reaktionszeit von 60 Minuten gibt man 50 g Butadien zu und polymerisiert bei 50°C für 60 Minuten. Danach ist der Umsatz vollständig. Man gibt 48 ml n-Dodecylmercaptan und 0,5 g Azodiisobutyronitril zu und erwärmt 5 Stunden lang auf 80°C. Nach Abkühlen auf Raumtemperatur wird das Blockcopolymerisat mit 2000 ml Ethanol, dem 2 g 2,6-Ditertiär-butyl-p-methylphenol zugesetzt wurden, aus der Cyclohexanlösung ausgefällt und im Vakuum bis zur Gewichtskonstanz getrocknet. Man erhält 140 g eines farblosen Blockcopolymerisats. [$\eta$] = 0,272 dl/g, Toluol, 25°C; 4,5 Gew.-% Schwefel im Polymerisat.

### B. Herstellung einer Pigmentdispersion

40 g Rußpigment mit einer Teilchengröße von 50 nm, einer BET-Oberfläche von 30 $m^2$/g und einem pH-Wert nach DIN 53 200 von 8,5 werden unter Feuchtigkeitsausschluß zusammen mit 8 g Dispergierhilfsmittel aus A und 152 g

getrocknetem Isododecan 16 Stunden lang in einer Stahlkugelmühle gemischt, wobei eine stabile Dispersion gebildet wird.

C. Umhüllung des dispergierten Pigmentes mit Polycyanacrylat

Je 100 g der Dispersion aus B werden unter Feuchtigkeitsausschluß in einen Rührreaktor überführt. Unter Rühren werden bei Raumtemperatur 1, 10, 20 und 40 g Isobutylcyanacrylat gelöst in trockenem Isododecan über einen Zeitraum von 30 Minuten zugetropft. Nach beendeter Zugabe wird 2 Stunden lang nachgerührt. Das umhüllte Pigment wird durch Zentrifugieren isoliert, mit Isododecan gewaschen und getrocknet. Der Umsetzungsgrad wird durch N-Analyse bestimmt.

| Isobutylmethacrylat | Umsatz | Durchmesser nm* |
|---|---|---|
| 5 % (bez. auf Pigment) | 92,0 % | 405 |
| 50 % (bez. auf Pigment) | 88,6 % | 398 |
| 100 % (bez. auf Pigment) | 94,0 % | 423 |
| 200 % (bez. auf Pigment) | 93,0 % | 495 |

* gemessen mittels Laser-Streulicht-Spektroskopie

Beispiel 2

24 g Helioechtblau HG (C.I. Nr. 74160), 6 g Copolymerisat aus 75 % Laurylmethacrylat und 25 % Isobutylmethacrylat mit MG 150 000 und 210 g Isododecan werden 10 h mit Hilfe einer Kugelschwingmühle gemischt. 100 g der erhaltenen Dispersion werden mit 100 g Isododecan verdünnt und

unter wirksamen Rühren über einen Zeitraum von 30 Minuten bei 25°C mit einem Gemisch aus 4,5 g Isobutylcyanacrylat und 1,5 g Allylcyanacrylat versetzt. Die Dispersion wurde 2 h bei 25°C nachgerührt, anschließend zentrifugiert und der isolierte Feststoff mit Isododecan gewaschen, erneut abzentrifugiert und getrocknet. Man erhält 30 g umhülltes Blaupigment.

Beispiel 3

Beispiel 2 wurde unter Verwendung von Helioechtgelb GRN (C.I. 21100) wiederholt. Man erhält 30 g umhülltes Gelbpigment.

Patentansprüche

1. Mit Polymerisat umhülltes Pigment, dadurch gekennzeichnet, daß die Polymerisathülle aus Polycyanacrylat besteht.

2. Umhülltes Pigment nach Anspruch 1, dadurch gekennzeichnet, daß das Pigment ein anorganisches oder organisches Pigment mit einer basischen oder neutralen Oberfläche ist.

3. Umhülltes Pigment nach Anspruch 1, dadurch gekennzeichnet, daß das Gewichtsverhältnis von Pigment zu Polymerisathülle 1:2 bis 1:0,01.

4. Verfahren zum Umhüllen eines basischen oder neutralen Pigmentes, dadurch gekennzeichnet, daß Cyanacrylat in einem aprotischen Lösungsmittel in Anwesenheit des dispergierten Pigmentes polymerisiert wird.